# EUROPEAN PATENT APPLICATION

(11) **EP 3 133 262 A1**
(43) Date of publication of application: **22.02.2017**
(21) Application number: 15779676.4
(22) Date of filing: 16.04.2015
(51) Int. Cl.: F02C 5/12, F01D 1/18, F02C 6/20

(54) **ENGINE JETTING OUT COMBUSTION GAS AS DRIVING FORCE**

(30) Priority: 18.04.2014 JP 2014086145; 17.11.2014 JP 2014232915
(71) Applicant: Amnext Technology Inc., Aoba-ku, Yokohama-shi, Kanagawa 2270034 (JP); Ohishi, Yasutoshi, Yokohama-shi, Kanagawa 227-0034 (JP)
(72) Inventor: OHISHI, Yasutoshi, Yokohama-shi, Kanagawa 2270034 (JP)
(74) Representative: Körber, Martin Hans
(86) International application number: PCT/JP2015/061737
(87) International publication number: WO 2015/159956

(57) **Abstract**

An engine (10) that jets out combustion gas as a driving force is provided. The engine (10) includes a combustion chamber (11), a fuel supplying path (13) that mixes fuel and air and supplies to the combustion chamber (11), an igniter (42) that ignites the mixed gas in the combustion chamber (11), a gas ejecting path (15) that ejects combustion gas (51) from the combustion chamber (11) though a nozzle (18a); and an opening-closing apparatus (80) that opens and closes the gas ejecting path (15). The gas ejecting path (15) is opened by the opening-closing apparatus (80) immediately before ignition, simultaneously with ignition, or immediately after ignition.

## Description

### TECHNICAL FIELD

The present invention relates to an engine that has a combustion chamber and ejects combustion gas as a driving force.

### BACKGROUND ART

Japanese Laid-open Patent Publication No. 2007-298013 discloses a rotary engine that obtains improved thermal efficiency. This rotary engine is constructed by housing a substantially triangular rotor in a cocoon-shaped housing that has an inner circumferential surface in the form of a trochoidal curve. In the housing, an intake pipe and an exhaust pipe are connected so as to be continuous, with the base ends thereof connected to each other so as to be continuous and sealed off from external space. Cooled regions that are cooled by a cooling mechanism and heated regions that are heated by a heating mechanism are formed on the inner circumferential surface of the housing. In each of the three working chambers formed between the housing and the rotor, gas drawn in from the intake pipe is cooled so as to contract by the cooled regions and is then heated by the heated regions so as to expand, with rotational forces being applied to the rotor due to such contraction and expansion of gas.

### DISCLOSURE OF THE INVENTION

Since the rotational movement of the rotor itself is used as the output, a rotary engine has the advantages of little noise and vibration compared to a reciprocal engine where reciprocal movement of pistons is converted into rotational movement. There is also demand for the provision of engines of different types to the above.

One aspect of the present invention is an engine that ejects (jets out) gas produced by combustion as a driving force, including: a combustion chamber; a first route that supplies fuel and an oxidant individually or as a mixture to the combustion chamber; means for igniting a mixed gas including the fuel and the oxidant in the combustion chamber; a second route that ejects combustion gas from the combustion chamber though a nozzle; and an opening-closing apparatus that opens and closes or substantially opens and closes the second route. By providing the opening-closing apparatus on the second route, the pressure inside the combustion chamber can be raised, even if the volume of the combustion chamber does not change or compression using a piston or the like is not performed. This makes it possible to obtain high-temperature, high-pressure combustion gas. Accordingly, the volume (capacity) of the combustion chamber may be fixed. The volume of the combustion chamber may be variable.

The combustion that occurs inside the combustion chamber may be deflagration or may be detonation. A typical oxidant is air. The first route may be a single route that supplies mixed gas or may be a plurality of routes that separately supply an oxidant, such as air, and fuel. The opening-closing apparatus for the second route may seal the second route or may substantially close the second route to an extent that it is possible to raise the internal pressure of the combustion chamber.

The engine may include a unit that carries out control of the opening-closing apparatus of the second route with relation to timing of igniting the mixed gas. The unit that carries out control may include a function that opens the second route immediately before ignition of the mixed gas, simultaneously with ignition, or immediately after ignition. The second route may be opened by the opening-closing apparatus immediately before ignition, simultaneously with ignition, or immediately after ignition. The opening-closing apparatus may be a valve, may be a vane, or may be a rotating plate that includes a part that closes the second route and a part that opens the second route. The rotating plate may include holes or may be a propeller type, and by using a motor or the like, it is possible to open and close the second route at appropriate timing by rotating in synchronization with the ignition timing.

The second opening-closing apparatus may include a means for opening the second route using pressure inside the combustion chamber. When the internal pressure of the combustion chamber has risen due to the supplying of fuel and oxidant, or has risen due to the start of combustion, it is possible to detect the rise in internal pressure and to automatically open the second route.

The engine may include a plurality of combustion chambers, and the opening-closing apparatus may include means for opening and closing the second routes of the plurality of combustion chambers in order or simultaneously.

The engine may be an engine that produces propulsion by expelling gas (combustion gas) outputted from the second route to the outside. The engine may include a turbine that is driven by the combustion gas (fired gas), with the turbine being rotated using part or all of the combustion gas. The rotating force obtained by the turbine can be used in various ways. A typical example is a generator unit that includes an engine and a generator that is driven by the turbine.

The engine may include a combustion chamber, a gas chamber connected by a gas supplying path (second route) to the combustion chamber, and an impeller that rotates inside the gas chamber and is disposed so that a gas flow (fired gas, combustion gas) that is supplied from the gas supplying path to the gas chamber passes a periphery of a shaft of the impeller. By dividing into the gas chamber where the impeller rotates and the combustion chamber, it is possible to simplify the configuration of the impeller that is a rotor and possible to simplify the configuration of the combustion chamber. In addition, by connecting the combustion chamber and the gas chamber with the gas supplying path, it is possible to control the flow of combustion gas inside the gas chamber so as to pass the periphery of the shaft of the impeller.

It is possible for this engine to use a circumferential flow-type impeller (bladed wheel, windmill) with a simple configuration as the impeller. With a circumferential flow-type impeller, by disposing a plurality of combustion chambers around the axis (or "in the circumferential direction"), it is possible, with a simple configuration, to increase the flow rate of gas that rotates the impeller. In addition, it is possible to provide vanes at the front ends of the impeller so as to close a connecting opening to the gas chamber on the second routes (gas supplying paths). That is, the second opening-closing apparatus may include vanes provided on the front ends of the impeller so as to close the connecting opening to the gas chamber on the second route. As described earlier, when supplying fuel and oxidant (combustion air) to the combustion chambers, the gas supplying paths are sealed and the compression ratio of the combustion chamber 11 is raised, which makes it possible to improve the combustion efficiency. The opening-closing apparatus may further include a unidirectional (one way) unit that prevents flow on the gas supplying paths (the second routes) from the gas chamber to the combustion chamber.

By further providing an inlet that introduces external air so as to pass the periphery of the shaft of the impeller, it is possible to use the impeller as a windmill. The engine may further include a first exhaust outlet that discharges a gas flow from the gas chamber and a second exhaust outlet that discharges external air from the gas chamber, and may include a common exhaust outlet that discharges the gas flow and external air from the gas chamber.

The engine may further include a plurality of combustion chambers disposed along a circumferential direction of the impeller and a plurality of gas supplying paths that connect each of the plurality of combustion chambers to the gas chamber and form gas flows that pass a periphery of the shaft of the impeller.

The engine is suited to applications where the impeller is rotated at a constant rotational speed. Accordingly, the engine is favorable as an engine of a generator unit, and one aspect of the present invention is a generator unit including an engine and a generator that is driven by rotation of the impeller.

A compact, low-cost generator unit is suited to a hybrid car. One aspect of the present invention is a car including the generator unit, a battery that stores power generated by the generator unit, a motor that is supplied with power generated by the generator unit, and tires driven by the motor. For a car with the engine that functions as a windmill, a generator unit, a battery, a motor, and tires driven by the motor, it is desirable to include an inlet path that guides external air from a front of the car to the inlet. Even when sufficient power is stored in the battery, by generating power using the wind without using fuel when the car is running, it is possible to recharge the battery and to further improve fuel consumption during running.

### BRIEF DESCRIPTION OF THE DRAWINGS

[FIG. 1]

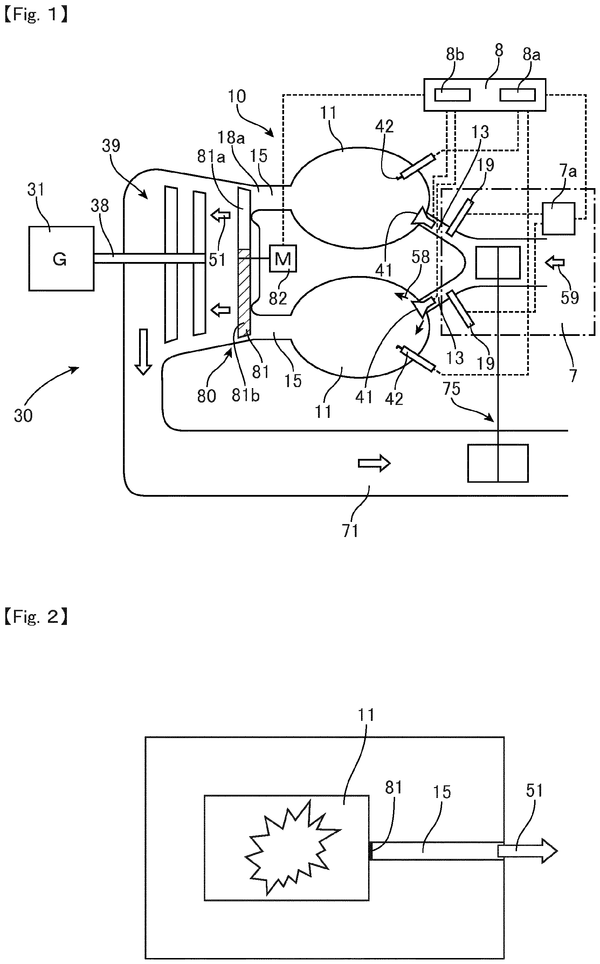

   FIG. 1 is a diagram schematically showing the configuration of a generator apparatus including an engine.
[FIG. 2]
   FIG. 2 shows simulation conditions.
[FIG. 3]

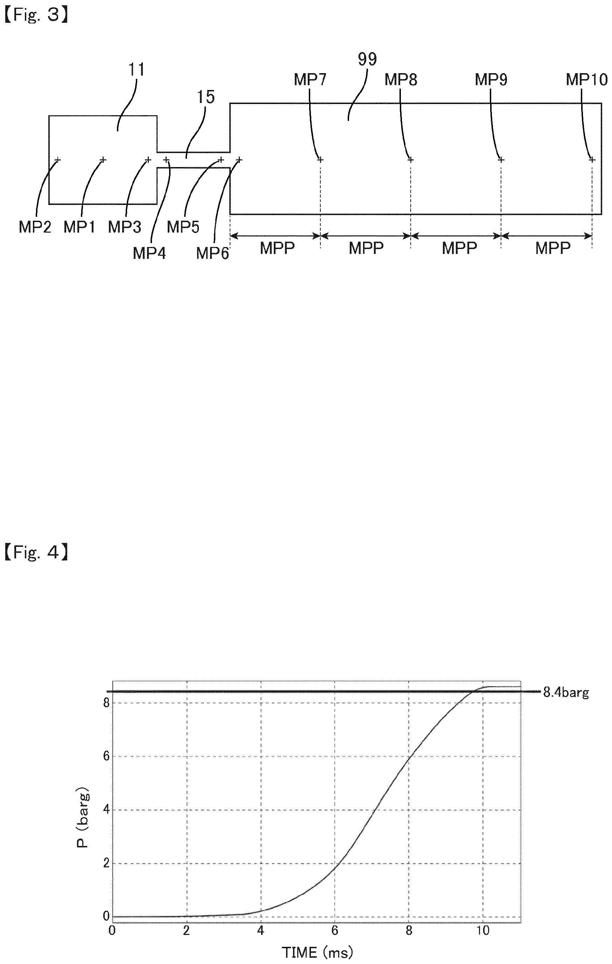

   FIG. 3 shows sampling points in a simulation.
[FIG. 4]
   FIG. 4 is a graph that shows combustion under conditions where a combustion chamber is sealed.
[FIG. 5]

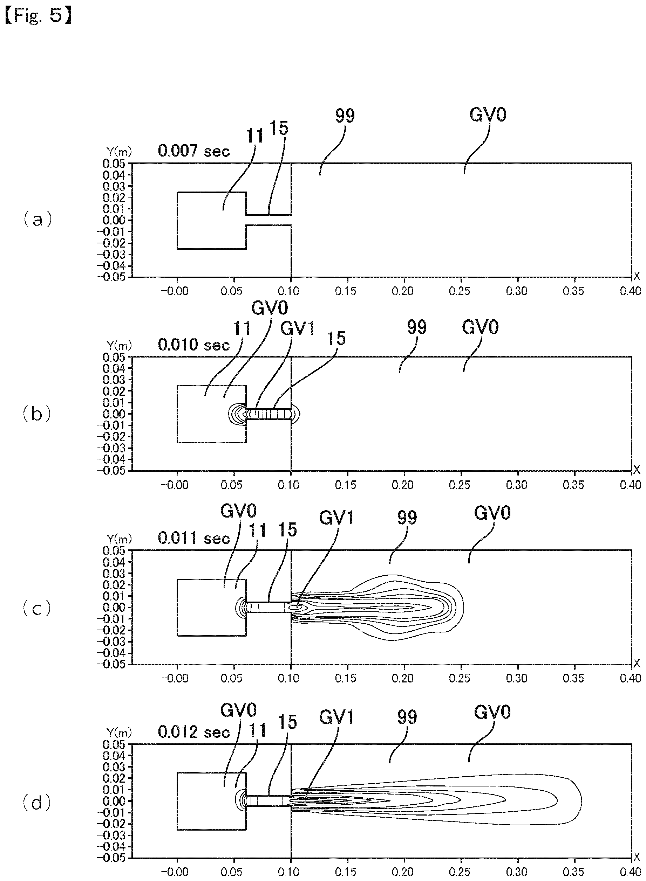

   FIG. 5 is a set of diagrams showing the velocity distributions of combustion gas in case 1.
[FIG. 6]

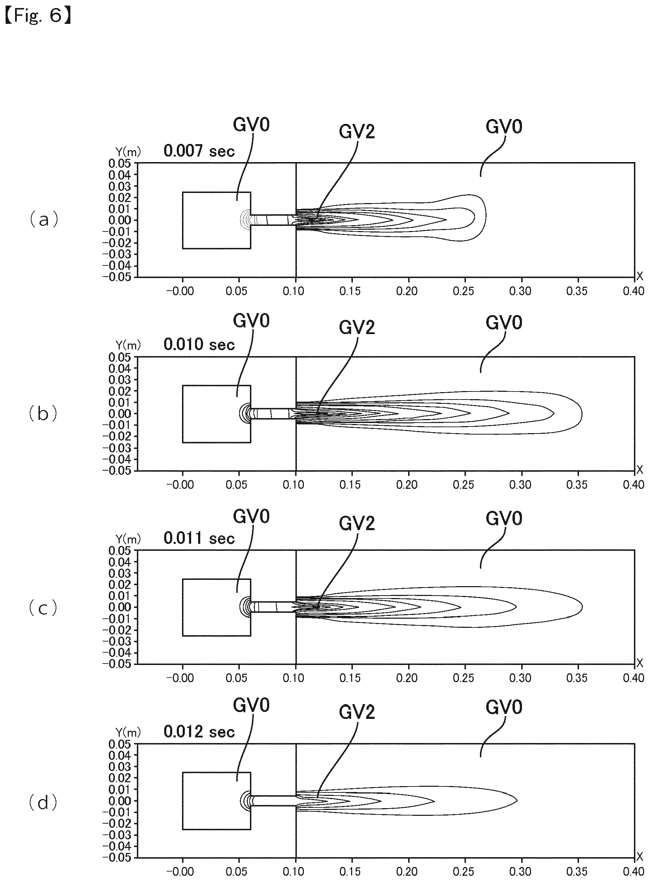

   FIG. 6 is a set of diagrams showing the velocity distributions of combustion gas in case 2.
[FIG. 7]

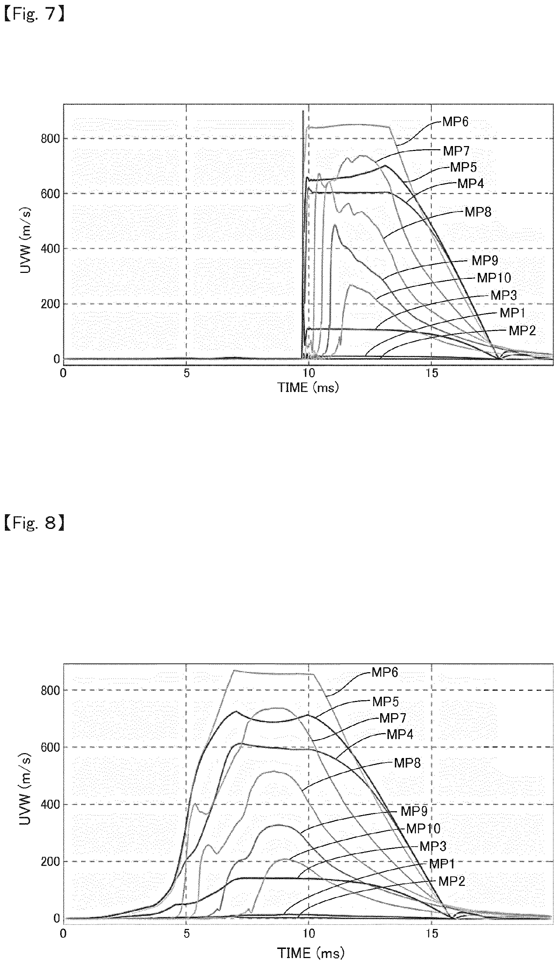

   FIG. 7 is a graph that shows the gas velocity at various points for case 1.
[FIG. 8]
   FIG. 8 is a graph that shows the gas velocity at various points for case 2.
[FIG. 9]

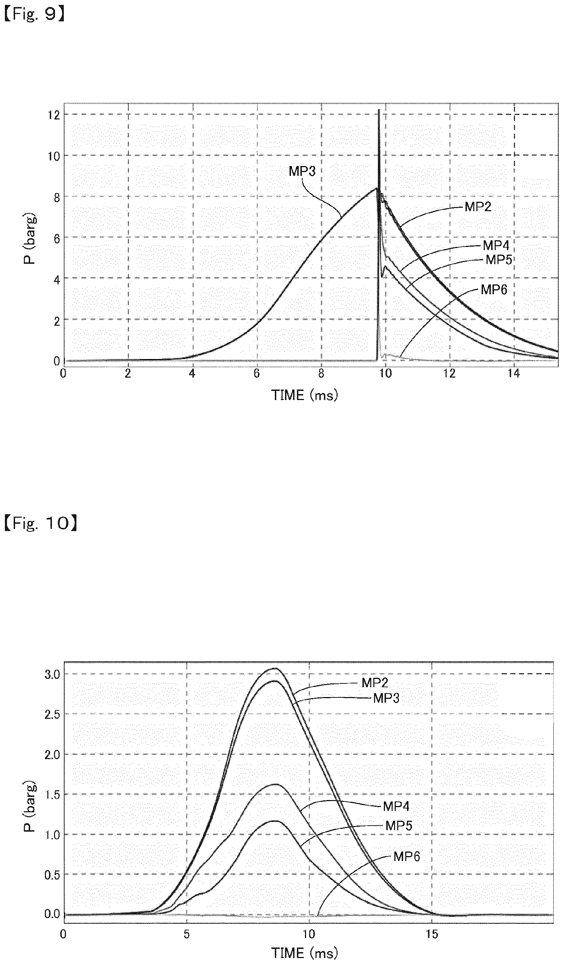

   FIG. 9 is a graph that shows pressure at various points in case 1.
[FIG. 10]
   FIG. 10 is a graph that shows pressure at various points in case 2.
[FIG. 11]

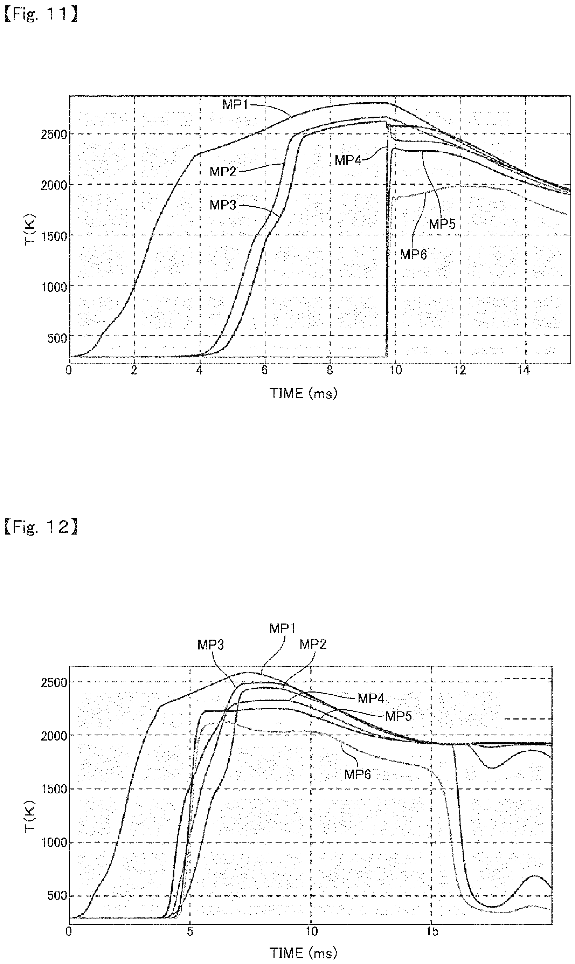

   FIG. 11 is a graph that shows temperature at various points in case 1.
[FIG. 12]
   FIG. 12 is a graph that shows temperature at various points in case 2.
[FIG. 13]

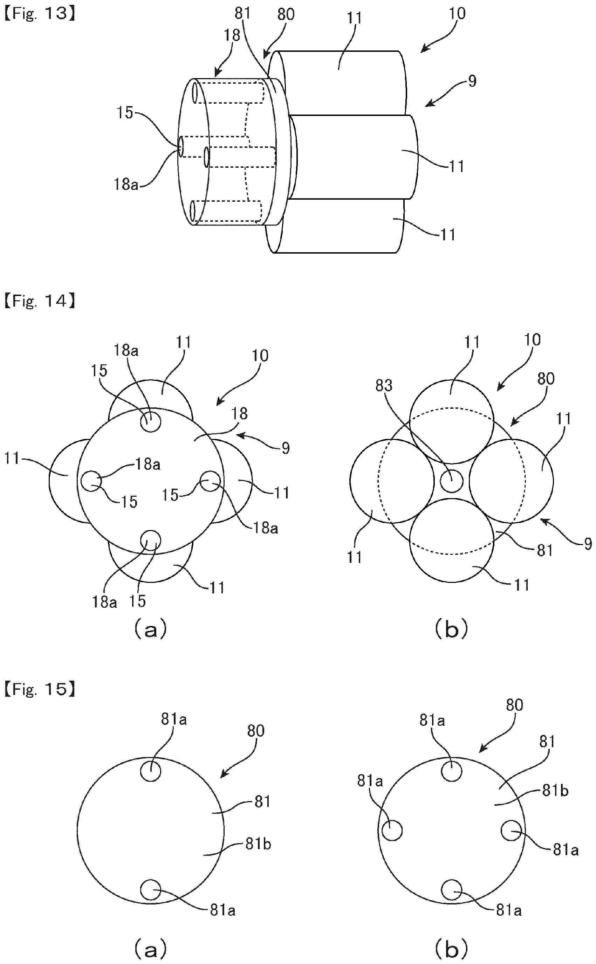

   FIG. 13 depicts an overview of a different engine.
[FIG. 14]
   FIG. 14(a) is a view depicting the engine depicted in FIG. 13 from the front, and FIG. 14(b) is a view depicting the engine from the rear.
[FIG. 15]
   FIG. 15(a) is a view depicting an example of an opening/closing panel and FIG. 15(b) is a view depicting a different example of an opening/closing panel.
[FIG. 16]

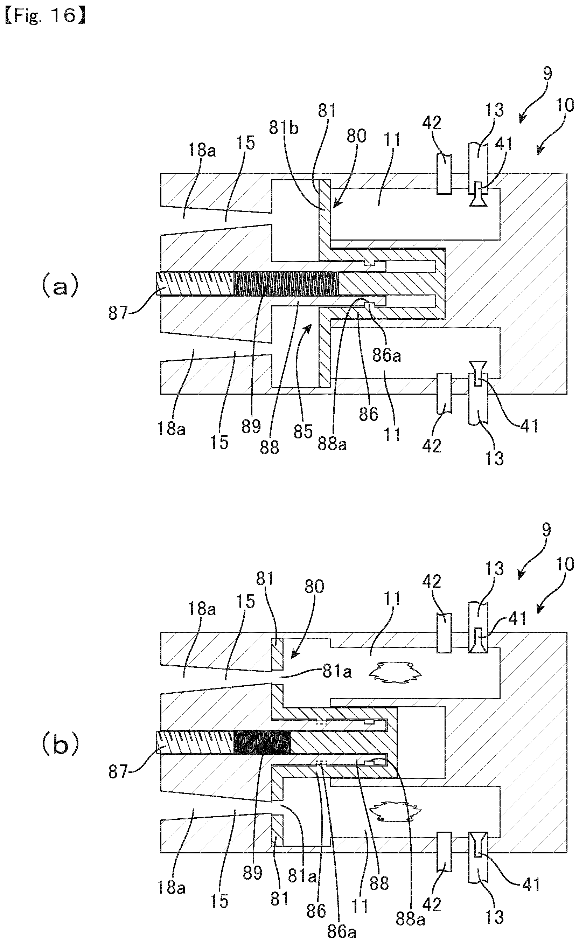

   FIG. 16 is cross-sectional views depicting an overview of a different engine, with FIG. 16(a) depicting the supplying of air and FIG. 16(b) depicting a state where combustion gas is ejected.
[FIG. 17]

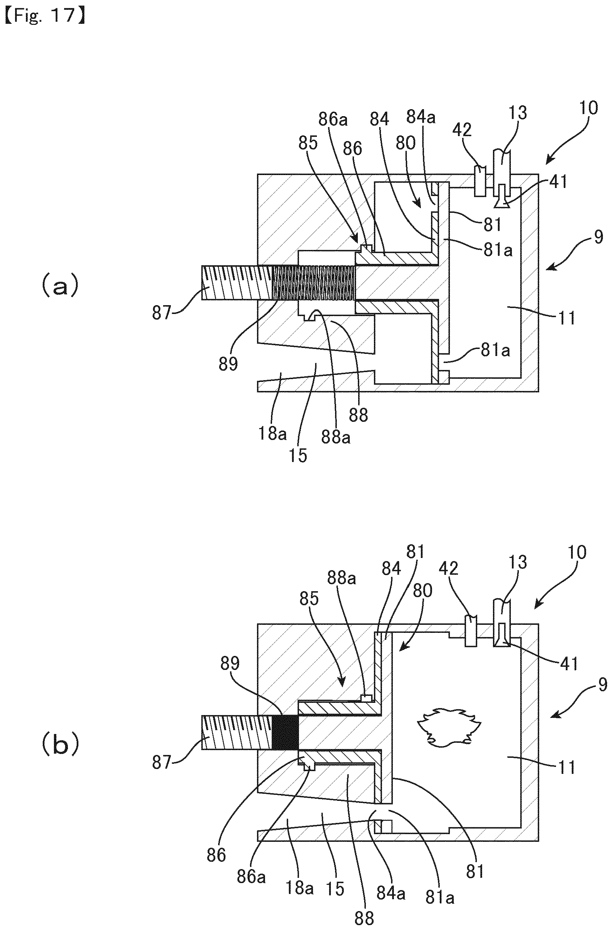

   FIG. 17 is cross-sectional views depicting an overview of a different engine, with FIG. 17(a) depicting the supplying of air and FIG. 17(b) depicting a state where combustion gas is ejected.
[FIG. 18]

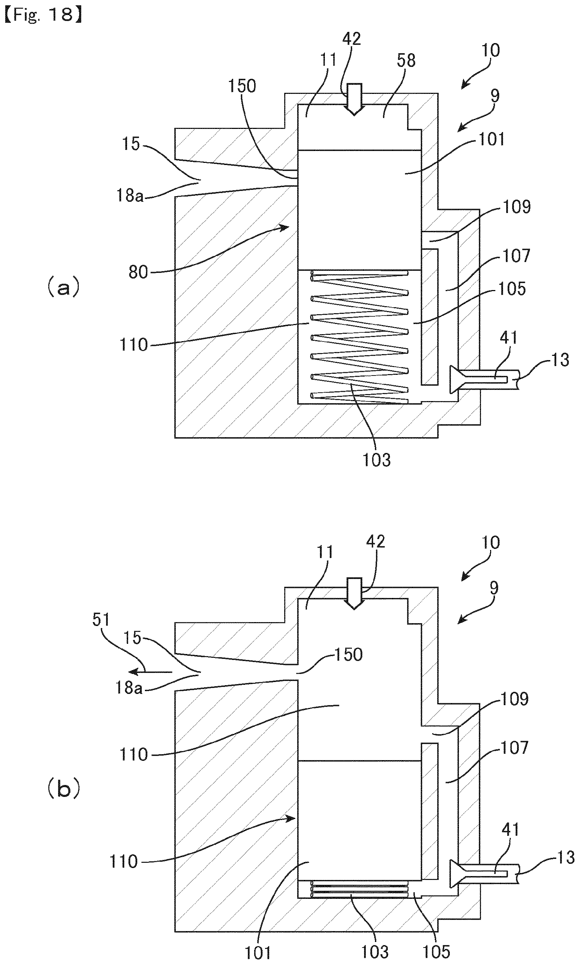

   FIG. 18 is cross-sectional views depicting an overview of a different engine, with FIG. 18(a) depicting the supplying of air and FIG. 18(b) depicting a state where combustion gas is ejected.
[FIG. 19]

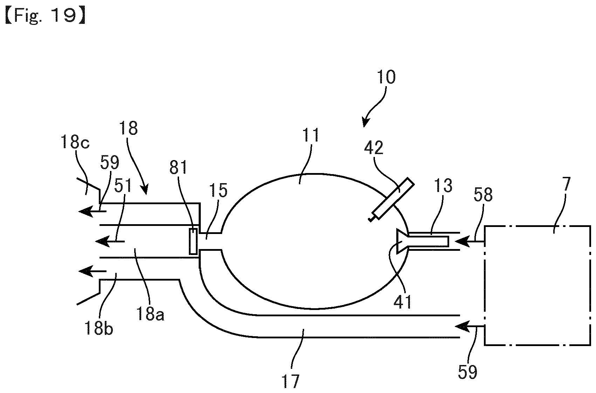

   FIG. 19 shows an overview of a different engine.
[FIG. 20]

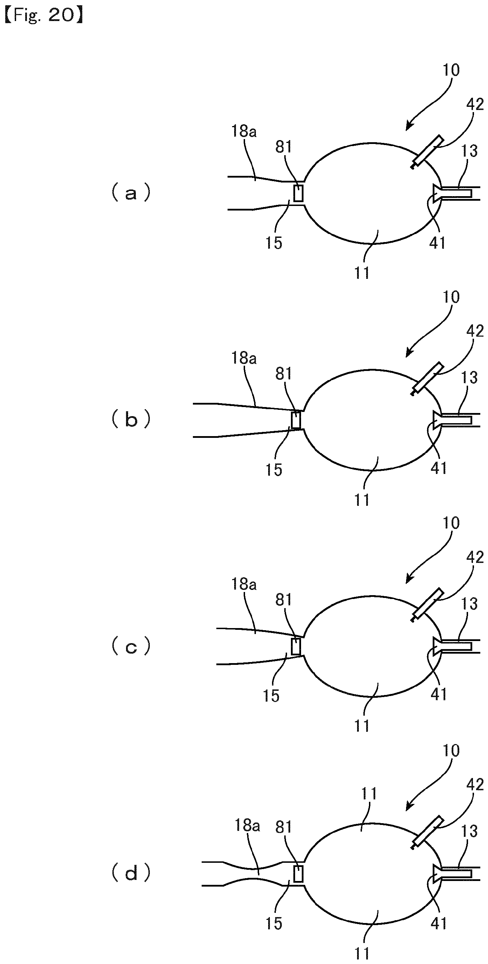

   FIG. 20 is a set of diagrams depicting a number of other examples of nozzles of an engine.
[FIG. 21]

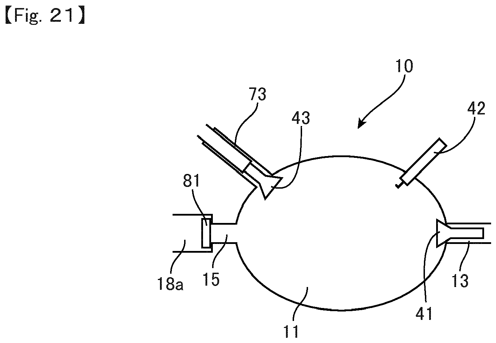

   FIG. 21 shows an overview of a yet another engine.
[FIG. 22]

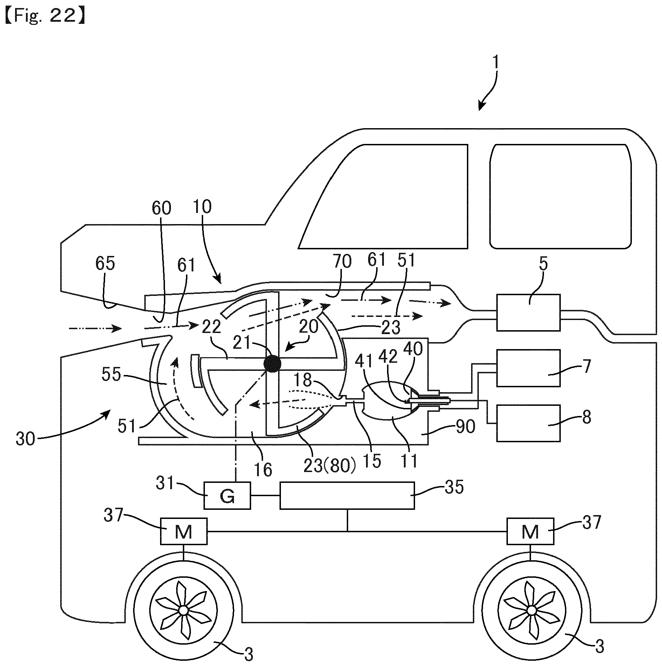

   FIG. 22 is a schematic diagram depicting a car equipped with a different engine.
[FIG. 23]

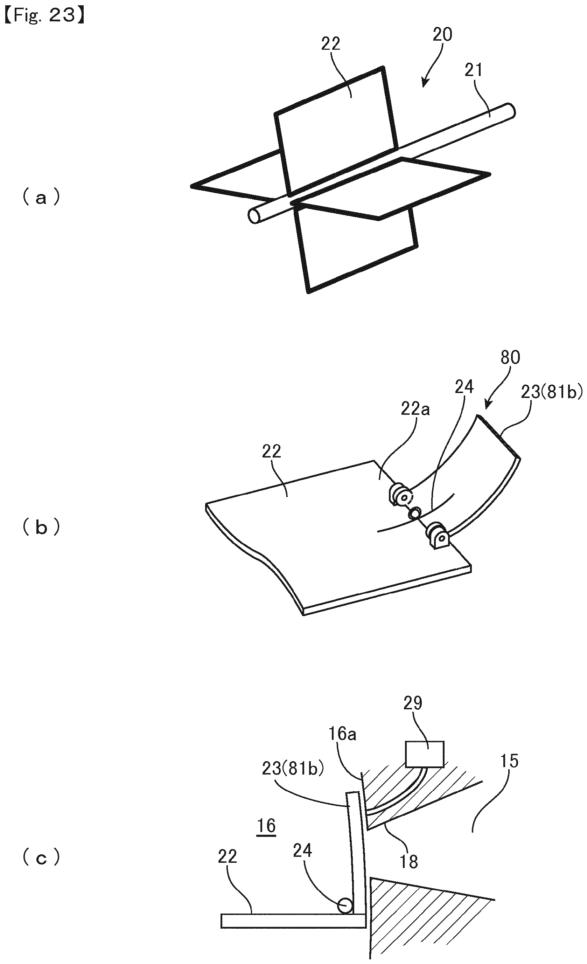

   FIG. 23 is a set of diagrams depicting an impeller that has been removed.
[FIG. 24]

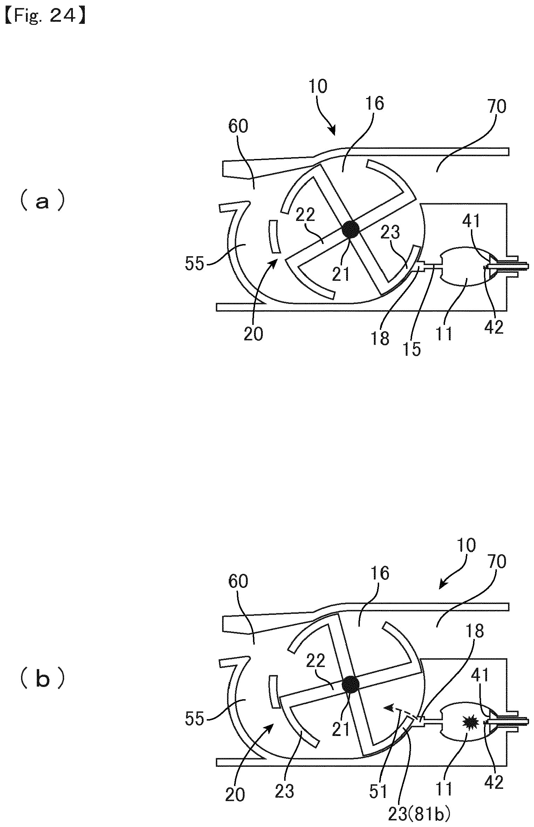

   FIG. 24 is a set of diagrams depicting how an engine rotates.
[FIG. 25]

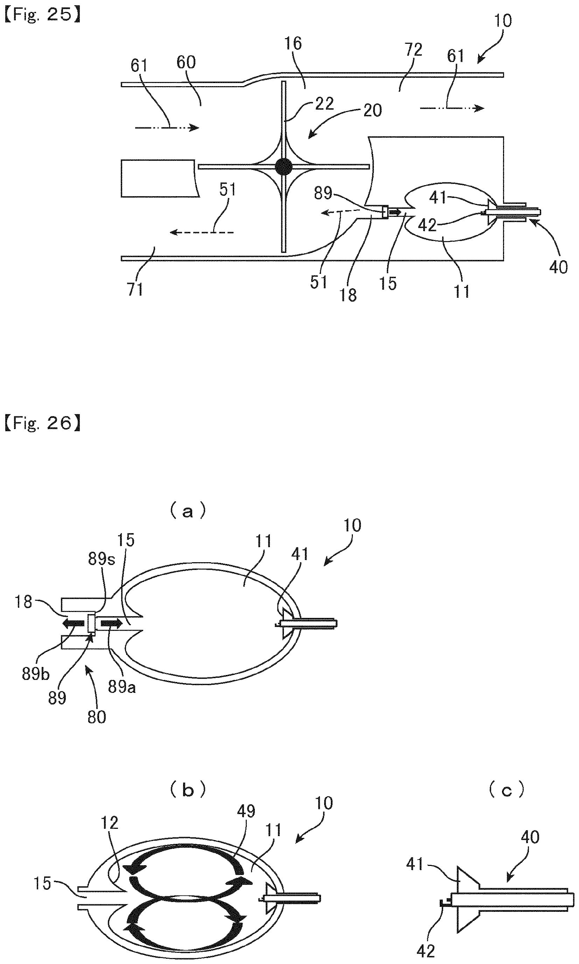

   FIG. 25 shows a different example of an engine.
[FIG. 26]
   FIG. 26 shows specific configurations of a combustion chamber.
[FIG. 27]

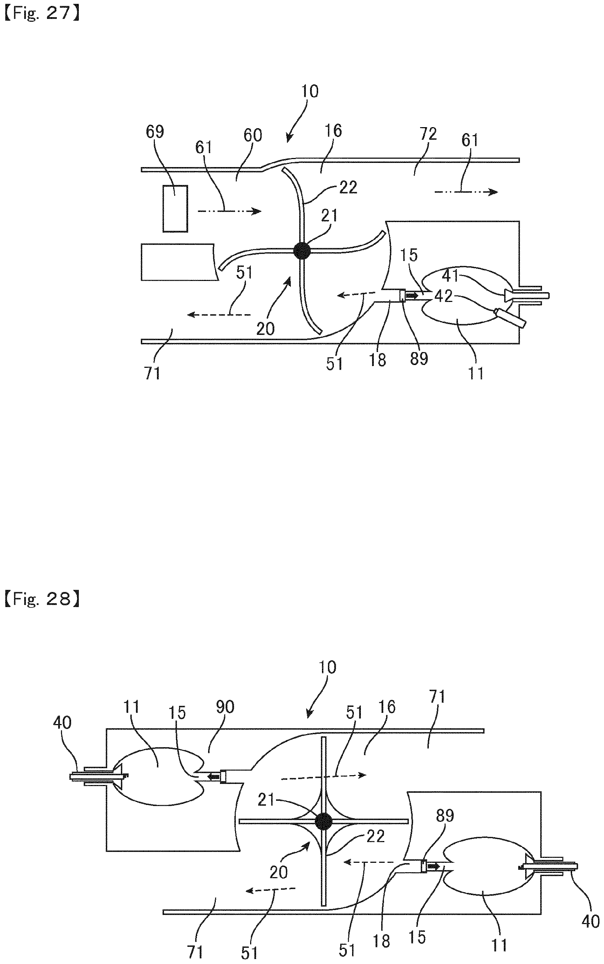

   FIG. 27 shows yet another example of an engine.
[FIG. 28]
   FIG. 28 shows yet another example of an engine.
[FIG. 29]

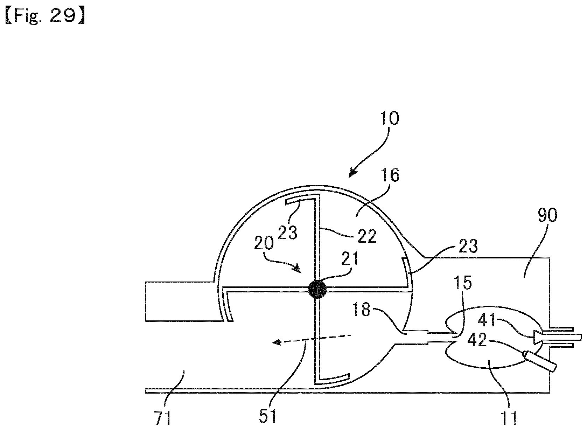

   FIG. 29 shows yet another example of an engine.

### DETAIL DESCRIPTION

FIG. 1 depicts an engine 10 and a generator unit 30 that includes a generator 31 that is rotationally driven by the engine 10. The generator unit 30 further includes a fuel supplying system 7 that supplies the engine 10 with mixed gas for combustion, which includes fuel and air for combustion, and a control system 8 that controls the engine 10 including the timing of combustion. The control system 8 includes an ignition control unit 8a that controls the ignition timing of igniters 42 that are an ignition means and an opening-closing control unit 8 that controls valves and the like.

The engine 10 is a type that outputs (ejects, jets out, blasts) combustion gas (fired gas) 51 generated by combustion in combustion chambers 11 as the main driving force (power source). The engine 10 includes the combustion chambers 11 that have a fixed volume (fixed capacity), a fuel supplying paths (first routes, supply ports) 13 that supply gas (mixed gas) 58, which is produced by mixing fuel and air as an oxidant, from the fuel supplying system 7 to the combustion chambers 11, the igniters 42 that ignite the mixed gas 58 in the combustion chambers 11, gas ejecting paths (gas discharging paths, expelling paths, second routes, expulsion pipes, expelling ports) 15 that jet out gas (combustion gas, fired gas, high-pressure gas) 51 from the combustion chambers 11 though nozzle 18a, valves (first opening-closing apparatuses) 41 that open and close the fuel supplying paths 13, an apparatus (second opening-closing apparatus, expulsion pipe opening-closing apparatus, ejecting path opening-closing apparatus) 80 that opens and closes the gas ejecting paths 15, and a turbine 39 disposed downstream of the gas ejecting paths 15. The generator 31 is connected to a rotational shaft 38 of the turbine 39 and is rotationally driven by the turbine 39.

Although the engine 10 includes two combustion chambers 11, one, or three or more combustion chambers 11 may be provided. Although the combustion chambers 11 are typically oval in shape, the combustion chambers 11 may be spherical or may be cylindrical, and may be any shape that is suited to combustion occurring in the combustion chambers 11 and the outputting of combustion gas.

The second opening-closing apparatus 80 that opens and closes the gas ejecting paths 15 includes a rotating plate (disc) 81 and a motor 82 that rotates the rotating plate 81. The rotating plate 81 includes an opening part 81a and a closing part 81b. The opening part 81a may be an opening that passes through the rotating plate 81 or may be a part where some of the rotating plate 81 has been cut away. The rotating plate 81 may be a disc or may have closing parts 81b intermittently provided around the center of rotation like a propeller. The closing parts 81b rotate with appropriate clearance from the gas ejecting paths 15 and only need to be capable of substantially sealing the gas ejecting paths 15 without completely sealing the paths so as to make it possible to raise the internal pressure of the combustion chambers 11. The closing part 81b may be provided with a labyrinth mechanism and a seal, and may be any configuration capable of sealing or effectively sealing the gas ejecting paths (gas expelling paths) 15 in a rotatable state.

The fuel supplying system 7 that supplies the mixed gas 58 to the combustion chambers 11 includes a turbocharger 75 that is driven by the exhaust of the turbine 39, injection systems 19 that inject fuel into the combustion air 59 that has been pressurized by the turbocharger 75, and a fuel injection control system 7a that controls the injection timing.

The typical combustion process of the engine 10 are as follows.
1. In a state where the gas ejecting path 15 has been opened by an opening part 81a, the valve 41 is opened to supply the air 59 and purge the combustion chamber 11.
2. In a state where the gas ejecting path 15 is closed by a closing part 81b, the valve 41 is opened to supply the mixed gas 58 into the combustion chamber 11 and increase the pressure in the combustion chamber 11.
3. The valve 41 is closed and the mixed gas 58 in the combustion chamber 11 is ignited by the igniter 42.
4. The gas ejecting path 15 is opened by the opening part 81a immediately before, at the same time as, or immediately after ignition, and the combustion gas 51 is expelled (outputted) from the combustion chamber 11 through the gas expelling path 15 to the turbine 39.

If a lot of unburned fuel is present in the combustion gas 51 expelled from the gas ejecting paths 15, a second combustion space may be provided between the gas ejecting paths 15 and the turbine 39. Gas expelling nozzles (gas ejecting nozzles) 18a may be provided downstream of the gas ejecting paths 15 or the gas ejecting paths 15 themselves may be the gas ejecting nozzles 18a. The second opening-closing apparatus 80 may open and close the gas ejecting paths 15 themselves, may open and close the nozzles 18a, may open and close the openings of the nozzles 18a, or may open and close any positions on the routes on which the combustion gas 51 is ejected.

By an opening-closing control unit 8b, the opening-closing apparatus 80 is capable of opening the combustion chamber 11 sides of the gas ejecting paths 15, that is, the gas ejection sides of the combustion chambers 11 immediately after ignition. The rotating plate 81 can be controlled (rotationally driven) by the motor 82 in synchronization with the ignition timing so as to switch from the closing part 81b to the opening part 81a immediately after ignition. In a state where combustion has caused a further increase in the internal pressure of a combustion chamber 11 from the state where the mixed gas 58 was introduced under pressure, the combustion gas 51 is expelled toward the turbine 39.

FIGS. 2 to 12 show the results of a simulation where deflagration is cyclically repeated in a combustion chamber 11. In this simulation, as depicted in FIG. 2, a cylindrical combustion chamber 11 with a diameter of 5cm and a length of 6cm was set and a cylindrical space with a diameter of 1cm and length of 5cm that is a passage from the combustion chamber 11 to the atmosphere was set as a gas ejecting path 15. After the combustion chamber 11 was filled so that the equivalence ratio (the mixing ratio of fuel gas and air) is one octane, the fuel was ignited and data on the temperature, pressure, and velocity of the combustion gas 51 expelled from the combustion chamber 11 was simulated using the combustion/explosion analysis software "FLACS". A pressure releasing panel (opening-closing panel) 81 was also set at the outlet of the combustion chamber 11 and the functioning of the opening-closing apparatus 80 was confirmed by opening and closing the pressure releasing panel 81. FIG. 3 depicts the positions of sampling points MP1 to MP10. The point MP1 is the point of ignition. The sampling points MP7 to MP10 on the outside 99 were set with a fixed pitch MPP (50mm) from the outlet of the gas expelling path 15.

FIG. 4 shows a rise in pressure in a combustion chamber 11 when the combustion chamber 11 has been ignited in a completely sealed state. The maximum pressure was 8.6 barg. Two cases, that is, a case (case 1) where the opening-closing panel 81 closes the gas ejecting path 15 until timing at which the internal pressure of the combustion chamber 11 reaches 8.4 barg and then opens the path, and a case (case 2) where the combustion chamber 11 is not sealed, that is, similar combustion to a so-called "pulse jet engine" were compared with this value.

FIG. 5 and FIG. 6 respectively show distributions of the gas flow rates after ignition for case 1 and case 2, respectively. The velocity GV0 depicts a velocity of 0m/s, and the velocity GV1 and the velocity GV2 depict the maximum velocities for case 1 and case 2. In these drawings, the velocity distributions are shown using lines (velocity distribution lines) with a pitch of around 75m/s from 0m/s to 850m/s. In case 1, the maximum velocity GV1 is over 900m/s, for example, 937m/s. In case 2, the maximum velocity GV2 is over 850m/s, for example, 881m/s. In FIG. 7, the flow rate (UVW) at each point in case 1 is shown and in FIG. 8, the flow rate of each point in case 2 is shown. It can be understood that the flow rates at points MP8 and MP9 on the outside are higher for case 1.

FIG. 9 shows the pressure (P) at each point in case 1 and FIG. 10 shows the pressure at each point in case 2. The outlet pressure of the gas ejecting path 15 has a maximum of around 5 barg for case 1 and a maximum of around 1.6 barg for case 2.

FIG. 11 shows the temperature (T) at each point in case 1 and FIG. 12 shows the temperature at each point in case 2. Although the outlet temperature in case 1 reaches a maximum of close to 2400 to 2500 degrees (K), the outlet temperature in case 2 reaches a maximum of around 2300 degrees (K). In this way, although the outlet gas conditions of the gas ejecting path 15 are around 5 barg and 2400 to 2500 degrees (K) for case 1, for case 2 the conditions are around 1.6 barg and 2300 degrees (K). Accordingly, for the engine 10 that outputs the combustion gas 51 as the main driving force (power source), it can be understood that the combustion efficiency of the engine 10 is raised and the amount of work that can be extracted in the turbine 39 is increased by opening and closing the outlet of the combustion chamber 11 or the gas expelling path 15.

Via the opening-closing control unit 8b, the opening-closing apparatus 80 is capable of opening the gas ejection side of a combustion chamber 11 immediately before ignition or simultaneous with ignition. To open immediately before ignition or simultaneous with ignition, it is possible to control (rotationally drive) the rotating plate 81 using the motor 82 in synchronization with the ignition timing so as to switch from the closing part 81b to the opening part 81a at such timing. Compared to an engine, such as a pulse jet engine, where it is not possible to raise the pressure inside the combustion chamber, it is possible to increase the internal pressure of the combustion chambers 11 before combustion. While using a simple configuration like that of a pulse jet engine, since it is possible to increase pressure during combustion, it is possible to increase the amount of work that can be extracted from the turbine 39.

With the engine 10, detonation or pseudo-detonation may be intermittently caused in the combustion chamber 11. By increasing the pressure of the mixed gas 58 to facilitate detonation, and switching to the opening part 81a immediately before or simultaneously with ignition, it is possible to protect the opening-closing apparatus 80 from shockwaves caused by detonation. The ignition apparatus (igniter) 42 for causing detonation may be any device, such as a laser, capable of further increasing the temperature of the mixed gas 58. As the valve 41, it is possible to use a rotary type valve that can withstand high pressure or a valve mechanism that has been developed for another detonation engine.

FIG. 13 shows an engine block 9 of a different engine 10 that has been extracted. The engine block 9 includes four combustion chambers 11, a nozzle block 18 that includes four gas ejecting paths 15, and a rotary opening/closing panel 81 that is rotatably installed between the combustion chamber 11 and the nozzle block 18. FIG. 14(a) shows the engine block 9 when looking from the expelling side and FIG. 14(b) shows the engine block 9 when looking from the opposite side. The engine block 9 includes the four combustion chambers 11 that are disposed around a circle at a 90-degree pitch and the gas ejecting paths 15 that are disposed around a circle at a 90-degree pitch so as to face the chambers 11, with the respective gas ejecting paths 15 functioning as the gas expelling nozzles (expulsion nozzles) 18a.

FIG. 15(a) shows an example of a rotating opening/closing panel 81 that functions as the opening/closing apparatus 80. FIG. 15(b) shows another example of an opening/closing panel 81. The opening/closing panel 81 is rotated about a shaft 83 by a motor (not illustrated) so that the opening parts 81a connect the combustion chambers 11 and the gas ejecting paths 15 at the most favorable timing for jetting out the combustion gas 51 from the combustion chambers 11 to the gas ejecting paths 15. The opening-closing panel 81 shown in FIG. 15(a) includes two circular opening parts 81a at positions with 180 degree symmetry so that out of the four combustion chambers 11, the combustion gas 51 is ejected via two gas expelling paths 15 at the same time out of the four combustion chambers 11. After this, the opening-closing panel 81 rotates further and the combustion gas 51 is expelled via the gas ejecting paths 15 from the remaining combustion chambers 11. The opening-closing panel 81 shown in FIG. 15(b) includes four opening parts 81a at positions with 90-degree symmetry, with the combustion gas 51 being expelled via the gas ejecting paths 15 simultaneously from the four combustion chambers 11. The opening parts 81a may be circular, may be oval, or may be formed by cutting away part of a circumference.

FIGS. 16(a) and (b) show, by way of a cross section, the engine block 9 of a different engine 10 that has been extracted. The engine block 9 internally includes a plurality of combustion chambers 11 and an opening-closing apparatus 80 that turns connections between the combustion chambers 11 and the gas ejecting paths 15 on and off. The opening-closing apparatus 80 includes the opening-closing panel 81 and a driving mechanism 85 that drives the opening-closing panel 81 according to variations in pressure inside the combustion chambers 11 to open and close the gas ejecting paths 15. The driving mechanism 85 includes a guide 88 on the engine block 9 side and a slide part 86 that slides the opening-closing panel 81 along the guide 88. The opening-closing panel 81 moves forward and back along the guide 88 in the center according to the pressure in the combustion chambers 11 to open and close the gas expelling paths 15. As depicted in FIG. 16(a), while the mixed gas 58 is being supplied though the fuel supplying paths 13 to the combustion chambers 11, the opening-closing panel 81 is pressed by a spring 89 toward the combustion chambers 11 so that the closing parts 81b of the opening-closing panel 81 shut off the combustion chambers 11 and the gas expelling paths 15.

As depicted in FIG. 16(b), when the fuel supplying paths 13 are closed by the valves 41 and the mixed gas 58 in the combustion chambers 11 is ignited by the igniters 42, the internal pressure in the combustion chambers 11 suddenly rises. As a result, the opening-closing panel 81 moves forward along the guide 88 against the elastic force of the spring 89. A cam groove 88a is provided on the guide 88, a cam pin 86a that enters the cam groove 88a is provided on the slide part 86 of the opening-closing panel 81 that slides along the guide 88, and when the opening-closing panel 81 moves forward and backward, the opening-closing panel 81 is guided by the cam pin 86a that has been fitted into the cam groove 88a and therefore rotates by 180 degrees, for example. By doing so, the opening parts 81a of the opening-closing panel 81 move to position that match the gas expelling paths 15 so as to connect the gas ejecting paths 15 and the combustion chambers 11. For this reason, the combustion gas 51 produced in the combustion chamber 11 is jetted out from the gas ejecting path 15 as a jet blast.

In this example, the opening-closing panel 81 is moved forward and backward (in the axial direction) by variations in the internal pressure of the combustion chambers 11 and by using the principles of a cylindrical cam, the opening-closing panel 81 is moved (rotated) by an appropriate angle. The method (mechanism) of rotating the opening-closing panel 81 may be a combination of a cam and a cam follower, or may be another configuration that mechanically converts forward and backward movement to rotation. With this configuration, it is possible to make the opening/closing panel 81 autonomously (voluntarily) rotate without using a motor, so that the gas ejecting paths 15 and the combustion chamber 11 can be connected at appropriate timing. The timing at which the opening-closing panel 81 rotates relative to increases in the internal pressure due to explosions in the combustion chambers 11 can be controlled by a spring adjusting mechanism 87, such as a screw, that adjusts the extension of the spring 89. It is also possible to change the amount of rotation relative to the amount of forward and backward movement of the opening-closing panel 81 by changing the design of the cam mechanism.

In the engine block 9 of this type, the opening-closing panel 81 moves so as to change the capacities of the combustion chambers 11. If the opening-closing panel 81 is provided so as to merely rotate, the forward and backward movement (stroke) of the opening-closing panel 81 may be short and the variation in the volumes of the combustion chambers 11 may be small. On the other hand, by greatly moving the opening-closing panel 81 in a direction that reduces the volumes of the combustion chambers 11 using an appropriate force after the mixed gas 58 has been supplied to the combustion chambers 11 via the fuel supplying paths 13, it is possible to increase the compression ratio of the mixed gas 58 and to further improve the combustion efficiency.

FIG. 17(a) and (b) show, by way of a cross section, the engine block 9 of yet another engine 10 that has been extracted. The engine block 9 internally includes one combustion chamber 11 and an opening-closing apparatus 80 that opens and closes a connection between the combustion chamber 11 and the gas ejecting path 15. The opening-closing apparatus 80 includes two opening/closing panels 81 and 84 that move simultaneously forward and backward according to the internal pressure of the combustion chamber 11 and the driving mechanism 85 that drives the opening/closing panels 81 and 84 according to pressure variations in the combustion chamber 11. In this example, if the opening/closing panels 81 and 84 move forward and backward in a direction that increases the capacity of the combustion chamber 11, the opening/closing panel 84 rotates in synchronization with the slide part 86 and as depicted in FIG. 17(b), an opening part 84a of the opening/closing panel 84 becomes coincident with the opening part 81a of the opening/closing panel 81 so that the combustion chamber 11 and the gas ejecting path 15 become connected.

FIGS. 18(a) and (b) show, by way of a cross section, the engine block 9 of yet another engine 10 that has been extracted. The engine block 9 internally includes one combustion chamber 11 and the opening-closing apparatus 80 that opens and closes a connection between the combustion chamber 11 and the gas ejecting path 15. The opening-closing apparatus 80 includes a piston 101 that moves inside the combustion chamber 11 and a spring 103 that supports and drives the piston 101. The engine block 9 has a cylindrical center cavity 110, with the piston 101 moving along the center axis of this cavity 110 and separating the cavity 110 into the combustion chamber 11 and an air intake chamber (pressurizing chamber) 105. The spring 103 is disposed along the center axis of the air intake chamber 105 of the cylindrical cavity 110 and the piston 101 moves in a state where the piston 101 is supported by the spring 103.

The air intake chamber 105 is connected to the fuel supplying path 13 so that the mixed gas 58 is first supplied to the air intake chamber 105. The air intake chamber 105 and the combustion chamber 11 are connected by an internal supply path 107 and the mixed gas 58 is supplied to the combustion chamber 11 from a gas supply port 109 of the combustion chamber 11. In the same way as an ejecting port (expelling port, discharging port) 150 that connects the combustion chamber 11 and the gas ejecting path 15, the gas supply port 109 is opened and closed by the piston 101.

FIG. 18(a) shows a state where the piston 101 has moved due to the spring 103 in a direction (in this example, upward) where the capacity (volume) of the combustion chamber 11 is minimized. Due to the movement of the piston 101, the mixed gas 58 that has been supplied though the gas supply port 109 to the combustion chamber 11 is compressed and then ignited by the igniter 42. Since the volume (capacity) of the air intake chamber 105 increases due to the piston 101 rising, the mixed gas 58 is drawn into the air intake chamber 105 from the fuel supplying path 13. Before the mixed gas 58 is ignited in the combustion chamber 11, a fuel supplying path 13 is shut off by the valve 41.

As shown in FIG. 18(b), when the internal pressure of the combustion chamber 11 increases due to the mixed gas 58 exploding, the piston 101 moves downward. First, the ejecting port 150 is opened to connect the combustion chamber 11 and the gas ejecting path 15 and the combustion gas 51 is jetted out from the gas ejecting path 15. When the piston 101 moves further downward, the gas supply port 109 opens and the mixed gas 58 is supplied from the air intake chamber 105 to the combustion chamber 11. Since the piston 101 moves in a direction that increases the volume of the combustion chamber 11 and decreases the volume of the air intake chamber 105, it is possible to supply the mixed gas 58 from the air intake chamber 105 to the combustion chamber 11 using the pressure difference that is produced by the movement of the piston 101.

It is possible to control the timing of opening and closing the ejecting port 150 that expels the combustion gas 51 from the combustion chamber 11 and the timing of opening and closing the gas supply port 109 that supplies the mixed gas 58 to the combustion chamber 11 by controlling the positions at which the ports 150 and 109 are provided on the combustion chamber 11, the form of the piston 101, the modulus of elasticity of the spring 103, and also the movement of the piston 101 using a suitable mechanism such as a cam. One example is the mechanism depicted in FIG. 18, and as examples, it is possible to provide the ports 150 and 109 at the same level and to open and close the ports 150 and 109 simultaneously using the piston 101, and/or to change the form of the piston 101 and change the opening and closing timing.

FIG. 19 shows a different example of the engine 10. This engine 10 includes a bypass line 17 that bypasses the combustion chamber 11 and supplies the air 59 to the nozzle block 18. The nozzle block 18 includes a combustion gas nozzle (ejection nozzle) 18a, an air nozzle 18b that introduces air 59 from the periphery, and a mixing nozzle 18c that mixes the combustion gas 51 and the air 59. By mixing excessive air 59 into the combustion gas 51 outputted from the combustion chamber 11, it is possible to lower the gas temperature at the turbine inlet and to promote the combustion of unburnt fuel using the excessive air 59. If increased pressure is required to introduce the air 59 into the air nozzle 18b of the nozzle block 18, a multistage turbocharger may be provided, or another pressurizing mechanism (supercharger or compressor) may be provided.

FIGS. 20(a) to (d) show a number of examples of combustion gas nozzles 18a that are integrated with the gas ejecting path (expulsion pipe, jet pipe) 15. Although the nozzle 18a depicted in FIG. 19 is in the form of a straight cylinder, the nozzle 18a depicted in FIG. 20(a) is in the form of a straight cone, the nozzle 18a depicted in FIG. 20(b) is a de Laval nozzle with a low design Mach number (for example, around 2.5), the nozzle 18a depicted in FIG. 20(c) is a de Laval nozzle with a high design Mach number (for example, around 3.0), and the nozzle 18a depicted in FIG. 20(d) is a venturi nozzle. Such nozzle types are mere examples, and it is possible to use a nozzle 18a of a suitable type according to conditions such as the combustion conditions and application.

FIG. 21 shows yet another example of the engine 10. The engine 10 includes a dedicated exhaust route (or "exhaust path" or "exhaust port") 73 and an apparatus (valve) 43 for opening and closing the exhaust path 73. After combustion in the combustion chamber 11 has ended, it is possible to close the gas ejecting path 15 using the opening-closing plate (opening/closing panel) 81 of the second opening-closing apparatus 80 and open the exhaust path 73 to purge the combustion chamber 11. It is possible to purge the combustion chamber 11 without supplying comparatively low-temperature gas (air) for purging purposes to the turbine.

FIG. 22 schematically shows a car (vehicle) that is equipped with an engine of another type. The car 1 includes a generator unit 30, a battery 35 that stores power generated by the generator unit 30, a motor 37 that is supplied, via the battery 35, with power generated by the generator unit 30, and tires 3 that are driven by the motor 37. The generator unit 30 includes the engine 10 and the generator 31 that is rotationally driven by the engine 10. In addition, the car 1 further includes a muffler 5 that passes the exhaust gas from the engine 10, a fuel supplying system 7 that supplies mixed gas for combustion that includes fuel and combustion air to the engine 10, and an electrical system 8 that controls the timing of combustion. When the compression ratio in the combustion chamber of the engine 10 is low and the compression noise is low, by omitting the muffler 5, it is possible to reduce the pressure drop in the exhaust system.

The engine 10 includes the combustion chamber 11, a gas chamber 16 that is connected to the combustion chamber 11 by the gas ejecting path (gas supplying path) 15, and an impeller (bladed wheel) 20 that rotates inside the gas chamber 16. The impeller 20 includes a shaft 21 and a plurality of fins (vanes) 22 that extend toward the circumference from the shaft 21. As described in detail later, sealing members 23 are attached to the front ends of the respective fins 22, with the sealing members 23 functioning as the second opening-closing apparatus 80 that opens and closes the gas expelling path 15.

FIG. 23(a) describes a typical impeller 20. The impeller 20 is a shaft provided with vanes, and includes the shaft 21 and four platelike fins 22 attached to the shaft 21 with a pitch of 90 degrees. The fins 22 may be curved into the shape of bowls or may be attached to the shaft 21 in the form of spirals. In addition, the number of fins 22 may be three or fewer, or five or more.

As explained in FIGS. 23(b) and 23(c), the impeller 20 according to the present embodiment has the sealing members 23 that form the apparatus 80 that opens and closes the nozzle 18 at the front end of the gas ejecting path 15 attached to the front ends 22a of the fins 22. The sealing members 23 are attached to parts of the front ends 22a of the fins 22 so as to extend (be curved) in the circumferential direction, and move while contacting an inner surface 16a of the gas chamber 16 due to a spring 24. The sealing members 23 may contact the inner surface 16a of the gas chamber 16 according to centrifugal force. A unit 29 that supplies oil may be provided to reduce the friction between the sealing members 23 and the inner surface 16a of the gas chamber 16.

The combustion chamber 11 is a cavity provided inside an engine block 90 that surrounds the gas chamber 16, and includes the valve 41 that supplies mixed gas for combustion and an ignition plug 42. In the present embodiment, a plug-incorporated valve 40 where the plug 42 and the valve 41 are integrated is used, so that it is possible to supply the mixed gas uniformly inside the combustion chamber 11.

The gas ejecting path 15 that supplies the combustion gas 51 from the combustion chamber 11 to the gas chamber 16 includes the nozzle 18 that jets out (expels) the combustion gas 51 so as to pass the periphery of (side of, about, circumferential of) the shaft 21 of the impeller 20 that rotates inside the gas chamber 16. In the present embodiment, the nozzle 18 is provided so as to emit the combustion gas 51 in a direction that is inclined by an angle θ toward the circumference from the direction of the shaft 21 (the direction of the center). It is desirable for the angle θ to be around 20 to 60 degrees.

FIG. 24(a) shows a step of introducing the mixed gas into the combustion chamber 11. At timing where the nozzle 18 is covered by the sealing member 23 at the front end of a fin 22 of the impeller 20, the valve 41 of the combustion chamber 11 is opened and mixed gas is introduced inside the combustion chamber 11. Accordingly, the sealing member 23 functions as a closing part 81b of the second opening-closing apparatus 80. Since the nozzle 18 is sealed, it is possible to introduce the mixed gas in a compressed state (a pressurized state) into the combustion chamber 11. The compression ratio can be controlled by the supplying pressure at the supply side of the mixed gas.

FIG. 24(b) shows a step of causing combustion of the mixed gas inside the combustion chamber 11. The impeller 20 rotates, the sealing member 23 is removed from the nozzle 18, and when the nozzle 18 is opened, the mixed gas that has been compressed inside the combustion chamber 11 is discharged from the combustion chamber. As described earlier, the sealing members 23 are capable of being set so as to open the nozzle 18 immediately before ignition, are capable of being set so as to open the nozzle 18 at the same time as ignition, and are capable of being set so as to open the nozzle 18 immediately after ignition.

As one example, by causing ignition with the plug 42 at the same time as a sealing member 23 opens the nozzle 18, combustion is performed from the inside of the combustion chamber 11 toward the outlet (nozzle) 18. As a result, a large amount of combustion gas 51 is expelled from the nozzle 18 so as to pass the periphery of the shaft 21 of the impeller 20 and pressure is applied to the fins 22 around the shaft 21 by the combustion gas 51, so that the impeller 20 rotates at high speed.

The engine 10 further includes an inlet 60 that introduces external air 61 into the gas chamber 16 so as to pass the periphery of (side of, about) the shaft 21 of the impeller 20. In the engine 10, the inlet 60 is provided on an opposite side to the nozzle 18 of the gas expelling path 15 with the shaft 21 in between. The car 1 includes an introducing path 65 that guides external air to the inlet 60 from the front or from the side. The introducing path 65 includes a venturi, and after increasing the flow rate by constricting the flow of the external air 61, the external air 61 passes the periphery of the impeller 20 and applies pressure to the fins 22.

The engine 10 further includes a common exhaust outlet 70 that discharges the combustion gas (gas flow) 51 and the external air 61 from the gas chamber 16 and an exhaust area 55 that guides the combustion gas 51 around the gas chamber 16 toward the exhaust outlet 70.

In the engine 10, first the combustion gas 51 produced in the combustion chamber 11 is jetted out from the nozzle 18 into the gas chamber 16 and caused to pass about the shaft 21 of the impeller 20. The combustion gas 51 contacts the fins 22 and causes the impeller 20 to rotate at high speed. The combustion gas 51 passes through the exhaust area 55 and discharged out of the engine 10 from the exhaust outlet 70. If the car 1 has stopped or is running at low speed, the combustion gas 51 may be also discharged via the inlet 60 and the introducing path 65.

If the car 1 is moving at medium or high speed, the external air 61 is introduced via the introducing path 65 from the inlet 60 into the gas chamber 16 of the engine 10. The introduced external air 61 passes about the shaft 21 of the impeller 20, contacts the fins 22, and causes the impeller 20 to rotate at high speed. After this, the external air 61 is discharged out of the engine 10 from the exhaust outlet 70.

Accordingly, in the engine 10, the impeller 20 may be rotated by the combustion gas 51 alone, or may be rotated by the combustion gas 51 and the external air 61, or the combustion may be stopped and the impeller 20 may be rotated by the external air 61. This means that with the car 1, it is possible to consume fuel and actively run the engine 10 to generate power and to stop combustion when sufficient power has been stored in the battery 35 and generate power by rotating the impeller 20 using the external air 61 only.

This means that with the car 1, when accelerating or running by driving the motor 37, some of the energy consumed by the motor 37 can be recovered by rotating the impeller 20 using the external air 61. With the car 1, it is also possible in a state where engine braking is necessary to recover (regenerate) energy by using the motor 37 as a generator.

FIG. 25 shows another example of an engine. The engine 10 includes a first exhaust outlet 71 that discharges a gas flow (combustion gas) 51 supplied from the combustion chamber 11 from the gas chamber 16 and second exhaust outlet 72 that discharges the external air 61 from the gas chamber 16. The engine 10 also includes a unidirectional unit (a "one-way valve" or "check valve") 89 that prevents flow from the gas chamber 16 of the gas expelling path 15 to the combustion chamber 11.

FIG. 26(a) shows the combustion chamber 11 extracted. A valve 89 is disposed midway on the gas ejecting path 15 though which the combustion chamber 11 is discharged. If the pressure at the gas chamber 16 is higher than the combustion chamber 11, the valve 89 moves in direction of the arrow 89a and contacts a sheet 89s to seal the gas ejecting path 15. When the mixed gas has exploded inside the combustion chamber 11, the valve 89 moves to the opposite side 89b due to heat energy (pressure) to open the gas ejecting path 15 and supply the gas (combustion gas) 51 to the gas chamber 16. Accordingly, the valve 89 functions as the second opening-closing apparatus 80 that opens and closes the gas expelling path 15. In this way, the second opening-closing apparatus 80 may open and close a position related to the outlet of the combustion chamber 11, may be the outlet of the nozzle 18, may be the outlet of the combustion chamber 11, or may open and close a position between the combustion chamber 11 and the nozzle 18.

As shown in FIG. 26(b), the combustion chamber 11 may have a protrusion 12 that protrudes inside the combustion chamber 11 at a position close to the opening of the gas expelling path 15. The protrusion 12 causes mixed gas 49 that has been drawn in from the valve 41 to swirl and gather in a central part of the combustion chamber 11. Accordingly, it is possible to facilitate combustion and improve the combustion efficiency.

FIG. 26(c) depicts a plug-incorporated valve 40 itself. The plug-incorporated valve 40 is provided to draw mixed air uniformly into the combustion chamber 11. The plug-incorporated valve 40 is provided at a position that draws mixed air into the combustion chamber 11 and as a whole fulfills the function of the valve 41. The plug-incorporated valve 40 is further provided with a plug 42 in a center part of the valve 41, with a spark being formed at the front end of the plug 42. By providing the plug-incorporated valve 40 in the center of the combustion chamber 11, it is possible to draw mixed gas uniformly into the combustion chamber 11.

With the plug-incorporated valve 40, the plug 42 needs to pass through the center of the plug 41 so as to attach the plug 42 to a center part of the valve 41. To make it possible to replace the plug 42, all or part of the hole that passes through the valve 41 is threaded to make it possible to attach and detach the plug 42.

FIG. 27 shows yet another example of an engine. In the combustion chamber 11 of the engine 10, the valve 41 and the plug 42 are separately disposed. The valve 41 that supplies the mixed gas is not limited to a single valve, and to increase the intake efficiency, a plurality of valves 41 may be disposed in the combustion chamber 11. It is also possible to supply mixed gas of different concentrations from the plurality of valves 41 and/or to supply air for purging purposes. An anemometer (wind speed detector) 69 is disposed at the inlet 60 for the external air 61, and if the pressure (speed) of the external air 61 is sufficiently high when the car 1 is running at high speed, the fuel is shut off and the impeller 20 is rotated by the external air 61 only. In place of the anemometer 69, it is possible to perform control on the combustion side to keep the rotational speed of the impeller 20 constant.

FIG. 28 shows yet another example of an engine. The engine 10 has two combustion chambers 11 disposed around the circumference of the gas chamber 16 of the engine block 90, that is, around the circumference of the impeller 20, and the respective combustion chambers 11 are connected to the gas chamber 16 via the gas ejecting paths 15. The combustion gas 51 is expelled from the respective gas ejecting paths 15 so as to flow around the periphery of the shaft 21 of the impeller 20. With an impeller 20 of this flow-around type, it is possible to increase the speed of the impeller 20 without the combustion gas 51 supplied from the plurality of gas ejecting paths 15 interfering. Accordingly, when the flow rate of the combustion gas 51 is insufficient, it is possible to achieve a sufficient gas flow by providing two or three or more combustion chambers 11 around the impeller 20.

Although the combustion chambers 11 are provided in a direction that faces the shaft 21 in this example, it is also possible to provide the combustion chambers 11 in directions at 90 degrees or at other angles. It is also possible to provide an inlet 60 for external air in addition to the plurality of combustion chambers 11.

FIG. 29 shows yet another example of an engine. The engine 10 has one combustion chamber 11 and has the simplest configuration where external air 61 is not introduced, making it possible to provide the engine 10 at low cost. The impeller 20 has a suitable gap (clearance) provided between the fins 22 and inner surface 16a of the gas chamber 16 except at the position where the gas nozzle 18 is opened and closed by the sealing members 23, which makes it possible to avoid excessive contact between the fins 22 and the gas chamber 16, with the direction in which the combustion gas 51 flows being decided by the clearance.

As described above, with the engine 10, the combustion gas 51 or the external air 61 collides with the vanes (or fins) of the impeller 20 to rotate the shaft 21. Since the shaft is more directly rotated than in a conventional engine driven by pistons, fuel consumption and rotational efficiency are favorable. Also, since the engine 10 can be realized without a complex mechanical construction, there is a reduction in the number of components, a reduction in breakdowns, with further advantages in reduced weight and cost. The engine 10 can rotate efficiently at a constant speed, which is suited to the driving unit of a generator unit 30. The engine 10 that has low fuel consumption, is compact, is lightweight, has high rpm, and is low cost has especially high utility value as the generator unit 30 of a hybrid car 1. In particular, an engine 10 of a type that generates power by drawing in the external air 61 is capable of recovering or regenerating some energy even when a car is running or accelerating with the motor 37 being driven, which achieves good fuel economy and makes it possible to extend the range.

Note that although an example where the generator unit 30 is installed in the car 1 has been described above, it is also possible to install the generator unit 30 in a boat, an airplane, in particular propeller aircraft, or another means of transport, such as a helicopter.

## Claims

1. An engine that ejects combustion gas as a driving force, comprising:
a combustion chamber;
a first route that supplies fuel and an oxidant individually or as a mixture to the combustion chamber;
means for igniting a mixed gas including the fuel and the oxidant in the combustion chamber;
a second route that ejects combustion gas from the combustion chamber though a nozzle; and
an opening-closing apparatus that opens and closes or substantially opens and closes the second route.

2. The engine according to claim 1,
further comprising a unit that carries out control of the opening-closing apparatus in relation to timing of igniting the mixed gas.

3. The engine according to claim 2,
wherein the unit that carries out control includes a function that opens the second route immediately before ignition of the mixed gas, simultaneously with ignition, or immediately after ignition.

4. The engine according to any one of claims 1 to 3,
wherein the opening-closing apparatus includes a rotating plate including a part that closes the second route and a part that opens the second route.

5. The engine according to claim 1,
wherein the opening-closing apparatus includes means for opening the second route using pressure inside the combustion chamber.

6. The engine according to claim 1, further comprising a plurality of combustion chambers,
wherein the opening-closing apparatus includes means for opening second routes respectively connected to the plurality of combustion chambers in order or simultaneously.

7. The engine according to any one of claims 1 to 6,
further comprising a turbine driven by the combustion gas.

8. A generator unit comprising:
the engine according to claim 7; and
a generator driven by the turbine.

9. The engine according to any one of claims 1 to 5, further comprising:
a gas chamber connected to the combustion chamber via the second route; and
an impeller that rotates inside the gas chamber and is disposed so that combustion gas that is supplied from the second route to the gas chamber passes a periphery of a shaft of the impeller.

10. The engine according to claim 9,
wherein the opening-closing apparatus includes a vane that is provided at a front end of the impeller so as to close a connecting opening that connects the second route to the gas chamber.

11. The engine according to claim 9 or 10,
wherein the gas chamber includes an inlet that introduces external air so as to pass a periphery of the shaft of the impeller.

12. The engine according to claim 11,
further comprising a first exhaust outlet that discharges the combustion gas from the gas chamber and a second exhaust outlet that discharges the external air from the gas chamber.

13. The engine according to claim 11,
further comprising a common exhaust outlet that discharges the combustion gas and the external air from the gas chamber.

14. The engine according to claim 9 or 10,
further comprising a plurality of combustion chambers disposed along a circumferential direction of the impeller.

15. A generator unit comprising:
the engine according to any one of claims 9 to 14; and
a generator driven by rotation of the impeller.

16. A car comprising:
the generator unit according to claim 8 or 15;
a battery that stores power generated by the generator unit;
a motor that is supplied with power generated by the generator unit; and
tires driven by the motor.

17. A car comprising:
the engine according to claim 11;
a generator unit including a generator driven by rotation of the impeller;
a battery that stores power generated by the generator unit;
a motor that is supplied with power generated by the generator unit; and
tires driven by the motor,
further comprising an inlet path that guides external air from a front of the car to the inlet.
